# EUROPÄISCHE PATENTSCHRIFT

(11) **EP 2 786 042 B1**
(45) Veröffentlichungstag und Bekanntmachung des Hinweises auf die Patenterteilung: **30.05.2018**
(21) Anmeldenummer: 12808672.5
(22) Anmeldetag: 31.10.2012
(51) Int. Cl.: F16F 15/14

(54) **FLIEHKRAFTPENDEL**
CENTRIFUGAL FORCE PENDULUM
PENDULE À FORCE CENTRIFUGE

(30) Priorität: 28.11.2011 DE 102011087238
(43) Veröffentlichungstag der Anmeldung: 08.10.2014
(73) Patentinhaber: Schaeffler Technologies AG & Co. KG, 91074 Herzogenaurach (DE)
(72) Erfinder: KÜHNLE, Michael, 77815 Bühl (DE); SCHNÄDELBACH, David, 76534 Baden-Baden-Neuweier (DE)
(86) Internationale Anmeldenummer: PCT/DE2012/001050
(87) Internationale Veröffentlichungsnummer: WO 2013/079042

(56) Entgegenhaltungen:
- DE-A1-102004 011 830
- DE-A1-102010 049 930
- FR-A- 1 000 629

## Beschreibung

Die Erfindung betrifft ein Fliehkraftpendel. Insbesondere betrifft die Erfindung ein Fliehkraftpendel zur Tilgung von Torsionsschwingungen in einem Antriebsstrang eines Kraftfahrzeugs. Bei der Übertragung eines Drehmoments, insbesondere in einem Antriebsstrang zwischen einem Antriebsmotor und einem Getriebe eines Kraftfahrzeugs, werden unterschiedlich komplexe Torsionsschwingungsdämpfer eingesetzt, um auftretende Torsionsschwingungen zu isolieren bzw. zu tilgen. Eine bekannte Maßnahme zum Abbauen derartiger Schwingungen ist der Einsatz eines Fliehkraftpendels. Ein Fliehkraftpendel umfasst einen Flansch, der mit einer Welle im Antriebsstrang gekoppelt ist, und einer Anzahl von Pendelmassen, die auf einem Umfang des Flanschs verschiebbar angeordnet sind. Bahnen, entlang derer sich die Pendelmassen gegenüber dem Flansch verschieben können, sind so gewählt, dass die Pendelmassen als kurzfristige Energiespeicher wirken, um Torsionsschwingungen im Antriebsstrang zu tilgen.

Ein Fliehkraftpendel ist ein Schwingungssystem, das eine vorbestimmte Resonanzfrequenz aufweist. Die Tilgung von Torsionsschwingungen ist im Bereich der Resonanzfrequenz stark und fällt in Richtung höherer und niedriger Frequenzen der Torsionsschwingungen ab.

Aus DE 10 2009 042 825 A1 und der DE 10 2010 049 930 A1, die als nächstliegender Stand der Technik angesehen ist, ist eine Drehmomentübertragungseinrichtung mit einem Fliehkraftpendel bekannt. Die Pendelmassen liegen paarweise auf unterschiedlichen Seiten des Flanschs und sind mittels eines Bolzens miteinander gekoppelt.

Eine ähnliche Anordnung ist in der DE 10 2009 052 055 A1 gezeigt, wobei entlang eines Umfangs des Flanschs unterschiedliche Pendelmassen mit unterschiedlichen Resonanzfrequenzen angeordnet sind, um das Tilgungsverhalten des Fliehkraftpendels auf unterschiedliche Betriebszustände eines Verbrennungsmotors abzustimmen.

In der DE 10 2011 011 469 ist ein Fliehkraftpendel gezeigt, bei dem die Pendelmassen zwischen zwei Flanschen liegen, die in axialer Richtung versetzt sind.

Um Schwingungen beispielsweise an einem Hubkolben-Verbrennungsmotor mit einer geringen Zylinderanzahl effektiv tilgen zu können, ist es wünschenswert, ein Fliehkraftpendel auf mehrere unterschiedliche Resonanzfrequenzen abstimmen zu können. Dabei soll das Fliehkraftpendel kompakt aufgebaut und möglichst verschleißfest sein. Der Erfindung liegt die Aufgabe zugrunde, ein derartiges Fliehkraftpendel anzugeben.

Die Erfindung löst die Aufgabe mittels eines Fliehkraftpendels mit den Merkmalen des Anspruchs 1. Unteransprüche geben bevorzugte Ausführungsformen wieder.

Ein erfindungsgemäßes Fliehkraftpendel zur Tilgung von Torsionsschwingungen in einem Antriebsstrang, insbesondere eines Kraftfahrzeugs, umfasst einen ersten und einen zweiten Flansch, die drehfest mit dem Antriebsstrang verbunden sind, sowie eine erste und eine zweite Pendelmasse, die axial versetzt zwischen den Flanschen angeordnet sind. Dabei weisen die Pendelmassen unterschiedliche Tilgungsfrequenzen auf.

Die Tilgungsfrequenzen betreffen in erster Linie Resonanzfrequenzen der Pendelmassen und in zweiter Linie einen Dämpfungsverlauf außerhalb der Resonanzfrequenzen. Durch die Verwendung von Pendelmassen mit unterschiedlichen Tilgungsfrequenzen ist es möglich, das Fliehkraftpendel in verbesserter Weise an ein Betriebsverhalten eines Antriebsmotors, insbesondere eines Hubkolben-Verbrennungsmotors, anzupassen. Beispielsweise kann ein Verbrennungsmotor mit selektiver Zylinderabschaltung, bei dem in unterschiedlichen Betriebszuständen unterschiedliche Zahlen von Zylindern aktiv sind, in seinem Torsionsschwingungsverhalten in verbesserter Weise durch das Fliehkraftpendel beeinflusst werden. Durch die axiale Anordnung der Pendelmassen entsteht ein kompaktes Fliehkraftpendel mit geringen axialen und radialen Bauraumanforderungen.

Bevorzugterweise sind die unterschiedlichen Tilgungsfrequenzen durch unterschiedliche Pendelbahnen der Pendelmassen festgelegt. Durch geeignete Auslegung der Pendelbahnen beispielsweise als Epizykloide oder Kreisbahnen, können die Tilgungsfrequenzen genau auf einen verwendeten Verbrennungsmotor bzw. dessen Betriebszustände abgestimmt werden. Eine Massenfertigung derartiger Pendelmassen bzw. des resultierenden Fliehkraftpendels kann dadurch ebenfalls erleichtert sein.

In einer weiter bevorzugten Ausführungsform verläuft eine an eine an den Flanschen angebrachte Pendelachse in axialer Richtung durch Aussparungen beider Pendelmassen. Zur Festlegung unterschiedlicher Pendelbahnen können die Aussparungen der Pendelmassen unterschiedlich geformt sein. Dadurch kann eine gemeinsame Lagerung der Pendelmassen mit einer einfachen Variation der Pendelbahnen und damit der Tilgungsfrequenzen der einzelnen Pendelmassen kombiniert werden.

Zusätzlich oder alternativ können zur Festlegung unterschiedlicher Pendelbahnen wirksame Durchmesser der Pendelachse an den Pendelmassen unterschiedlich sein. Dadurch können gegebenenfalls die Aussparungen in den Pendelmassen gleich sein, während trotzdem unterschiedliche Pendelbahnen und damit unterschiedliche Tilgungsfrequenzen erzielt werden. Die gleichen Pendelmassen können mehrfach verwendet werden, so dass Herstellungskosten gesenkt sein können.

In einer Ausführungsform sind zwischen der Pendelachse und den Pendelmassen Wälzlager angeordnet, wobei die Wälzlager unterschiedliche Außendurchmesser aufweisen. Die Variation der wirksamen Durchmesser der Pendelachse kann dadurch auf einfache Weise realisiert sein. Insbesondere können die Wälzlager gleiche Innendurchmesser aufweisen, so dass die Pendelachse im Bereich der Wälzlager zylindrisch ausgeformt sein kann. Dadurch können eine Herstellung der Einzelteile des Fliehkraftpendels sowie eine Montage vereinfacht sein, wodurch Kosten eingespart werden können.

In einer weiteren Ausführungsform können zur Festlegung unterschiedlicher Tilgungsfrequenzen die Pendelmassen unterschiedliche Massen aufweisen. Insbesondere können die Pendelmassen aus einem ebenen Flachmaterial, beispielsweise einem Blech, herstellbar sein und unterschiedliche Umrisse in radialer Richtung aufweisen. Dadurch kann die Tilgungsfrequenz jeder Pendelmasse leicht beeinflussbar sein.

Zur Festlegung unterschiedlicher Tilgungsfrequenzen können auch Schwerpunkte der Pendelmassen unterschiedliche Lagen aufweisen. Die Lagen der Schwerpunkte, insbesondere in radialer Richtung, können beispielsweise durch die Lage der Ausnehmungen variiert sein.

In einer Ausführungsform umfasst die erste Pendelmasse zwei separate Pendelgewichte, die axial auf unterschiedlichen Seiten der zweiten Pendelmasse angeordnet sind. Dadurch kann die Masse der ersten Pendelmasse gegenüber der Masse der zweiten Pendelmasse vergrößert sein, während gleichzeitig in axialer Richtung eine symmetrische Verteilung von Kräften erfolgen kann. Die Einleitung von Kräften von den Pendelmassen in die Flansche durch die Pendelachse, insbesondere im Resonanzfall, kann durch diese Anordnung verbessert sein.

In einer Ausführungsform sind drei oder mehr Pendelmassen mit unterschiedlichen Tilgungsfrequenzen vorgesehen. Bezüglich der Zahl der Pendelmassen bestehen theoretisch keine Einschränkungen, es können auch vier oder mehr axial versetzte Pendelmassen zwischen den Flanschen angeordnet sein. In einer Ausführungsform können Pendelmassen auch axial außerhalb der Flansche angeordnet sein. Dabei wirken einander gegenüberliegende Pendelmassen vorzugsweise als eine gemeinsame Pendelmasse, indem sie die gleichen Tilgungsfrequenzen aufweisen. Weiter bevorzugterweise unterscheidet sich die Tilgungsfrequenz der dritten Pendelmassen von den Tilgungsfrequenzen der ersten und der zweiten Pendelmassen.

In einer Ausführungsform ist eine Fixiereinrichtung zur schaltbaren Kopplung der ersten an die zweite Pendelmasse vorgesehen. Dadurch kann das Tilgungsverhalten des Fliehkraftpendels beispielsweise gezielt an die Zahl der in Betrieb befindlichen Zylinder eines Verbrennungsmotors angepasst werden.

### Kurze Beschreibung der Figuren

Die Erfindung wird nun mit Bezug auf die beigefügten Figuren genauer beschrieben, in denen:
Fig. 1 eine axiale Ansicht eines Fliehkraftpendels;
Fig. 2 eine Schnittansicht des Fliehkraftpendels von Fig. 1; und
Fig. 3 eine perspektivische Ansicht des Schnitts von Fig. 2
darstellt.

### Genaue Beschreibung von Ausführungsbeispielen

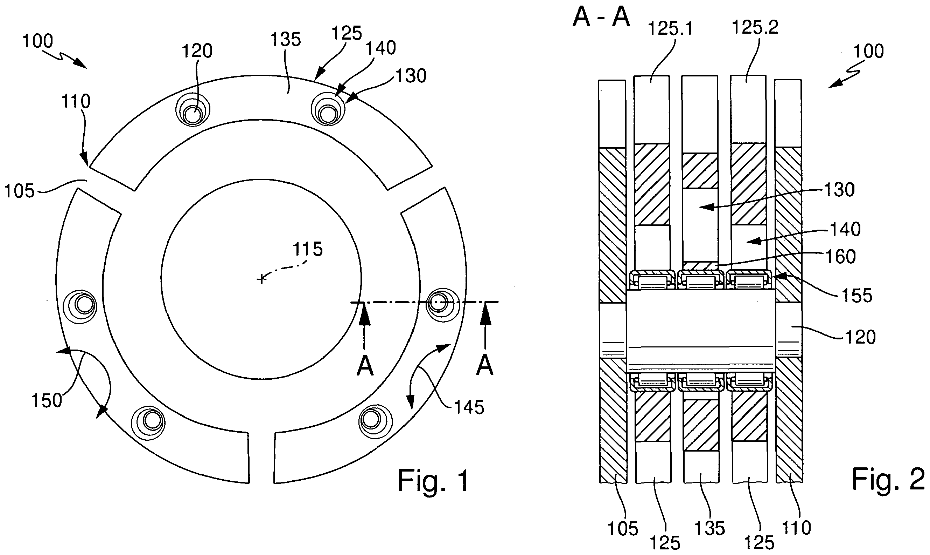

Fig. 1 zeigt eine axiale Ansicht eines Fliehkraftpendels 100. Das Fliehkraftpendel 100 umfasst einen ersten Flansch 105 und einen zweiten Flansch 110, die um eine Drehachse 115 drehbar angeordnet sind. Der zweite Flansch 110 ist zum leichteren Verständnis in Fig. 1 nicht dargestellt. Die beiden Flansche 105 und 110 sind mittels Pendelachsen 120 starr aneinander gekoppelt. Die Pendelachsen 120 liegen vorzugsweise auf einem gemeinsamen Umfang um die Drehachse 115.

Erste Pendelmassen 125 mit Aussparungen 130 sowie zweite Pendelmassen 135 mit Aussparungen 140 sind axial versetzt so angebracht, dass jeweils eine Pendelachse 120 durch die Aussparungen 130 bzw. 140 verläuft. Dadurch ergeben sich drei Stapel von Pendelmassen 125, 135, die auf dem Umfang der Pendelachsen 120 um die Drehachse 115 gleichmäßig verteilt sind. In Fig. 1 ist von der ersten Pendelmasse 125 ein dem Betrachter zugewandter Abschnitt 125.1 nicht dargestellt (vgl. Fig. 2).

Die Formen der Ausnehmungen 130 und 140 legen zusammen mit den wirksamen Durchmessern der Pendelachsen 120 jeweils eine Pendelbahn für die erste Pendelmasse 125 bzw. die zweite Pendelmasse 135 fest. Eine erste, kreisbogenförmige Pendelbahn 145 und eine zweite, epizyklische Pendelbahn 150 sind exemplarisch eingezeichnet. In unterschiedlichen Ausführungsformen können die Pendelbahnen 145, 150 auch so festgelegt sein, dass sich die Pendelmassen 125, 135 beim Auslenken entlang der zugeordneten Pendelbahn 145, 150 jeweils um eine eigene Achse drehen und dadurch zusätzliche Energie speichern. Eine derartige Ausführungsform ist unter der Bezeichnung Trapezpendel bekannt. In der in Fig. 1 dargestellten Ausführungsform sind die Pendelmassen 125, 135 bifilar aufgehängt, eine unifilare Aufhängung ist ebenfalls möglich. Die Anzahl der Pendelachsen 120 und der korrespondierenden Ausnehmungen 130, 140 ist nicht auf zwei beschränkt.

Schwerpunkte der Pendelmassen 125 und 130 können bezüglich der Pendelmassen 125, 130 unterschiedliche Lagen, insbesondere in radialer Richtung, aufweisen. Die Lagen der Schwerpunkte können insbesondere durch die Platzierungen der Ausnehmungen 130 bzw. 140 beeinflusst sein.

Fig. 2 zeigt eine Schnittansicht des Fliehkraftpendels 100 von Fig. 1. Dabei erfolgt der Schnitt entlang der in Fig. 1 eingezeichneten Schnittlinie A-A.

Die Pendelachse 120 zwischen dem ersten Flansch 105 und dem zweiten Flansch 110 ist stufenweise zylindrisch. Endabschnitte der Pendelachse 120 weisen geringere Durchmesser als ein Mittenabschnitt auf. Die Endabschnitte führen durch korrespondierende Aussparungen in den Flanschen 105 und 110 und können zur Sicherung an den Flanschen 105, 110 verstemmt, vernietet, verschweißt oder auf eine andere bekannte Weise befestigt sein.

Auf die Pendelachse 120 sind Nadellager 155 aufgebracht, um die Pendelmassen 125, 135 reibungsarm auf ihren Pendelbahnen 145, 150 zu führen. Dabei trägt eines der Nadellager 155 radial außen einen Distanzring 160, so dass ein wirksamer Durchmesser der Pendelachse 120 in diesem Bereich vergrößert ist. Alternativ oder zusätzlich kann der wirksame Durchmesser beispielsweise auch durch einen vergrößerten Käfig des Nadellagers 155, Wälzkörper mit größeren Durchmessern oder auf eine andere Weise gebildet sein. Durch die Variation des wirksamen Durchmessers kann die jeweilige Pendelbahn 145, 150 beeinflusst sein, wodurch die Tilgungsfrequenz der jeweiligen Pendelmasse 125, 135 beeinflusst ist.

In der dargestellten Ausführungsform ist die erste Pendelmasse 125 in ein erstes Pendelgewicht 125.1 und ein zweites Pendelgewicht 125.2 aufgeteilt. Die beiden Pendelgewichte 125.1 und 125.2 liegen in axialer Richtung auf unterschiedlichen Seiten bezüglich der zweiten Pendelmasse 130. Dabei weisen die einzelnen Pendelgewichte 125.1 und 125.2 vorzugsweise identische Tilgungsfrequenzen auf. Dies kann insbesondere dadurch erreicht werden, dass das Material, die Form und die Lage der Pendelgewichte 125.1 und 125.2 sowie die Form, Größe und Lage der Ausnehmungen 140 und die wirksamen Durchmesser der Pendelachse 120 im Bereich der Pendelgewichte 125.1 und 125.2 identisch sind. Eine zusätzliche mechanische Kopplung der Pendelgewichte 125.1 und 125.2 ist dann nicht mehr erforderlich, kann aber zur verbesserten Synchronisierung der Tilgungsfrequenzen durchgeführt werden, beispielsweise mittels einer axialen Niete.

Die Tilgungsfrequenzen der Pendelmassen 125 und 135 sind unterschiedlich gewählt. Dabei ist jede Tilgungsfrequenz gebildet durch eine Resonanzfrequenz der jeweiligen Pendelmasse 125, 135 und einen Dämpfungsverlauf in Richtung höherer und niedrigerer Frequenzen. In einem bevorzugten Ausführungsbeispiel sind die Tilgungsfrequenzen der Pendelmassen 125, 135 nur schwach oder gar nicht überlappend und decken Torsionsschwingungen ab, die in unterschiedlichen Betriebszuständen eines das Fliehkraftpendel 100 antreibenden Antriebsmotors bevorzugt auftreten. Der Antriebsmotor kann insbesondere ein Hubkolben-Verbrennungsmotor mit selektiver Zylinderabschaltung sein. Je nach Betriebszustand des Verbrennungsmotors können insbesondere unterschiedliche Anzahlen Kolben zur Generierung von Drehmoment verwendet werden, wodurch Frequenzen von Torsionsschwingungen, die vom Antriebsmotor ausgehen, in Frequenz und Amplitude unterschiedlich sind.

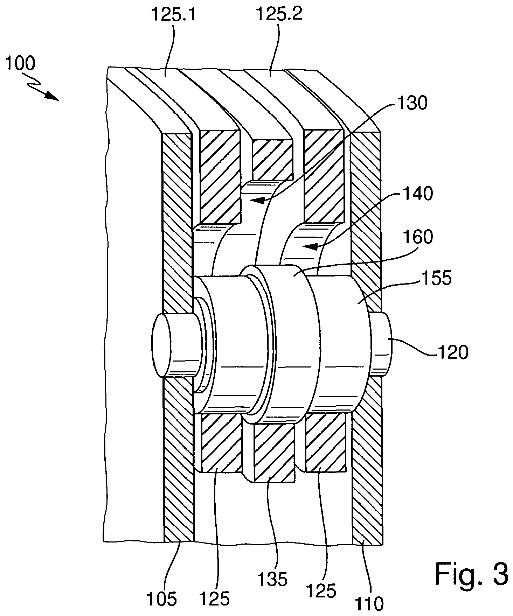

Fig. 3 zeigt eine perspektivische Ansicht des Schnitts von Fig. 2.

Durch die Auslegung der Pendelmassen 125, 135 auf unterschiedliche Tilgungsfrequenzen weist auch das Fliehkraftpendel 100 unterschiedliche Tilgungsfrequenzen auf. Zur verbesserten Anpassung der Tilgungsfrequenzen des Fliehkraftpendels 100 an zu erwartende Torsionsschwingungen des Antriebsmotors kann eine der Pendelmassen 125, 135 an den Flanschen 105, 110 befestigt werden, während sich der Antriebsmotor in einem ersten Betriebszustand befindet, und freigegeben, wenn sich der Antriebsmotor in einem zweiten Betriebszustand befindet. Die unterschiedlichen Betriebszustände können unterschiedliche Anzahlen aktiver Zylinder umfassen.

In einer weiteren, nicht dargestellten Ausführungsform können auch mehr als zwei Pendelmassen 125, 135 verwendet werden. Eine nicht dargestellte dritte Pendelmasse 165 kann zwischen den Flanschen 105, 110 angeordnet sein. Bevorzugterweise ist die dritte Pendelmasse 165 in zwei separate Pendelgewichte 165.1 und 165.2 aufgeteilt, die, in ähnlicher Weise wie die Pendelgewichte 125.1 und 125.2 der ersten Pendelmasse 125, spiegelsymmetrisch zur zweiten Pendelmasse 130 angeordnet sind.

In einer anderen Ausführungsform sind die Pendelgewichte 165.1 und 165.2 jeweils axial außerhalb der Flansche 105 und 110 angeordnet. Bevorzugterweise erfolgt die Lagerung aller Pendelmassen 125, 130, 165 mittels der gleichen Pendelachsen 120.

### Bezugszeichenliste

- 100: Fliehkraftpendel
- 105: erster Flansch
- 110: zweiter Flansch
- 115: Drehachse
- 120: Pendelachse
- 125: erste Pendelmasse
- 125.1: erstes Pendelgewicht der ersten Pendelmasse 125
- 125.2: zweites Pendelgewicht der ersten Pendelmasse 125
- 130: Ausnehmung der ersten Pendelmasse 125
- 135: zweite Pendelmasse
- 140: Ausnehmung der zweiten Pendelmasse 135
- 145: erste Pendelbahn (kreisbogenförmig)
- 150: zweite Pendelbahn (epizyklisch)
- 155: Nadellager
- 160: Distanzring
- 165: dritte Pendelmasse
- 165.1: erstes Pendelgewicht der dritten Pendelmasse 165
- 165.2: zweites Pendelgewicht der dritten Pendelmasse 165

## Patentansprüche

1. Fliehkraftpendel (100) zur Tilgung von Torsionsschwingungen in einem Antriebsstrang, insbesondere eines Kraftfahrzeugs, wobei das Fliehkraftpendel (100) folgende Elemente umfasst:
- einen ersten (105) und einen zweiten Flansch (110), die drehfest mit dem Antriebsstrang verbunden sind;
- eine erste (125) und eine zweite Pendelmasse (135), die axial versetzt zwischen den Flanschen (105, 110) angeordnet sind; wobei
- die Pendelmassen (125, 135) unterschiedliche Tilgungsfrequenzen aufweisen, wobei die unterschiedlichen Tilgungsfrequenzen durch unterschiedliche Pendelbahnen (145, 150) der Pendelmassen (125, 135) festgelegt sind, **dadurch gekennzeichnet, dass** eine an den Flanschen (105, 110) angebrachte Pendelachse (120) in axialer Richtung durch Aussparungen (130, 140) beider Pendelmassen (125, 135) verläuft und zur Festlegung unterschiedlicher Pendelbahnen (145, 150) die Aussparungen (130, 140) der Pendelmassen (125, 135) unterschiedlich geformt sind.

2. Fliehkraftpendel (100) nach Anspruch 1, wobei eine an den Flanschen (105, 110) angebrachte Pendelachse (120) in axialer Richtung durch Aussparungen (130, 140) beider Pendelmassen (125, 135) verläuft und zur Festlegung unterschiedlicher Pendelbahnen (145, 150) wirksame Durchmesser der Pendelachse (120) in Bereichen der Pendelmassen (125, 135) unterschiedlich sind.

3. Fliehkraftpendel (100) nach Anspruch 2, wobei zwischen der Pendelachse (120) und den Pendelmassen (125, 130) Wälzlager (155) angeordnet sind und die Wälzlager (155) unterschiedliche Außendurchmesser aufweisen.

4. Fliehkraftpendel (100) nach einem der vorangehenden Ansprüche, wobei zur Festlegung unterschiedlicher Tilgungsfrequenzen die Pendelmassen (125, 135) unterschiedliche Massen aufweisen.

5. Fliehkraftpendel (100) nach einem der vorangehenden Ansprüche, wobei zur Festlegung unterschiedlicher Tilgungsfrequenzen Schwerpunkte der Pendelmassen (125, 135) unterschiedliche Lagen aufweisen.

6. Fliehkraftpendel (100) nach einem der vorangehenden Ansprüche, wobei die erste Pendelmasse (125) zwei separate Pendelgewichte (125.1, 125.2) umfasst, die axial auf unterschiedlichen Seiten der zweiten Pendelmasse (135) angeordnet sind.

7. Fliehkraftpendel (100) nach einem der vorangehenden Ansprüche, wobei drei oder mehr Pendelmassen (125, 135, 165) mit unterschiedlichen Tilgungsfrequenzen vorgesehen sind.

8. Fliehkraftpendel (100) nach einem der vorangehenden Ansprüche, wobei axial außerhalb der Flansche (105, 110) dritte Pendelmassen (165) angeordnet sind.

## Claims

1. Centrifugal force pendulum (100) for absorbing torsional vibrations in a drive train, in particular of a motor vehicle, the centrifugal force pendulum (100) comprising the following elements:
- a first flange (105) and a second flange (110) which are connected fixedly to the drive train so as to rotate with it;
- a first pendulum mass (125) and a second pendulum mass (135) which are arranged in an axially offset manner between the flanges (105, 110);
- the pendulum masses (125, 135) having different absorbing frequencies, the different absorbing frequencies being defined by way of different pendulum paths (145, 150) of the pendulum masses (125, 135), **characterized in that** a pendulum pin (120) which is attached on the flanges (105, 110) runs in the axial direction through cut-outs (130, 140) of the two pendulum masses (125, 135), and the cut-outs (130, 140) of the pendulum masses (125, 135) are shaped differently in order to define different pendulum paths (145, 150).

2. Centrifugal force pendulum (100) according to Claim 1, a pendulum pin (120) which is attached on the flanges (105, 110) running in the axial direction through cut-outs (130, 140) of the two pendulum masses (125, 135), and active diameters of the pendulum pin (120) being different in regions of the pendulum masses (125, 135) in order to define different pendulum paths (145, 150).

3. Centrifugal force pendulum (100) according to Claim 2, anti-friction bearings (155) being arranged between the pendulum pin (120) and the pendulum masses (125, 130), and the anti-friction bearings (155) having different external diameters.

4. Centrifugal force pendulum (100) according to one of the preceding claims, the pendulum masses (125, 135) having different masses in order to define different absorbing frequencies.

5. Centrifugal force pendulum (100) according to one of the preceding claims, centroids of the pendulum masses (125, 135) having different positions in order to define different absorbing frequencies.

6. Centrifugal force pendulum (100) according to one of the preceding claims, the first pendulum mass (125) comprising two different pendulum weights (125.1, 125.2) which are arranged axially on different sides of the second pendulum mass (135).

7. Centrifugal force pendulum (100) according to one of the preceding claims, three or more pendulum masses (125, 135, 165) with different absorbing frequencies being provided.

8. Centrifugal force pendulum (100) according to one of the preceding claims, third pendulum masses (165) being arranged axially outside the flanges (105, 110).

## Revendications

1. Pendule inertiel (100) destiné à amortir les vibrations en torsion d'un train d'entraînement, en particulier d'un véhicule automobile, le pendule inertiel (100) comportant les éléments suivants :
une première bride (105) et une deuxième bride (110) reliées à rotation solidaire au train d'entraînement,
une première masse pendulaire (125) et une deuxième masse pendulaire (135) disposées à un décalage axial entre les brides (105, 110),
les masses pendulaires (125, 135) présentant des fréquences d'amortissement différentes, les différentes fréquences d'amortissement étant définies par des pistes pendulaires (145, 150) différentes des masses pendulaires (125, 135),
**caractérisé en ce que**
un axe (120) de pendule installé sur les brides (105, 110) s'étend dans la direction axiale à travers des découpes (130, 140) des deux masses pendulaires (125, 135) et **en ce que** les découpes (130, 140) des masses pendulaires (125, 135) ont des formes différentes pour définir des pistes pendulaires (145, 150) différentes.

2. Pendule inertiel (100) selon la revendication 1, dans lequel un axe pendulaire (120) installé sur les brides (105, 110) s'étend dans la direction axiale à travers les découpes (130, 140) des deux masses pendulaires (125, 135) et en ce que pour définir différentes pistes pendulaires (145, 150), les diamètres effectifs des axes pendulaires (120) sont différents au niveau des masses pendulaires (125, 135).

3. Pendule inertiel (100) selon la revendication 2, dans lequel des paliers de roulement (155) sont disposés entre l'axe pendulaire (120) et les masses pendulaires (125, 130) et en ce que les paliers de roulement (155) présentent des diamètres extérieurs différents.

4. Pendule inertiel (100) selon l'une des revendications précédentes, dans lequel les masses pendulaires (125, 135) présentent des masses différentes pour définir différentes fréquences d'amortissement.

5. Pendule inertiel (100) selon l'une des revendications précédentes, dans lequel les centres de masse des masses pendulaires (125, 135) présentent des positions différentes pour définir différentes fréquences d'amortissement.

6. Pendule inertiel (100) selon l'une des revendications précédentes, dans lequel la première masse pendulaire (125) comporte deux poids pendulaires (125.1, 125.2) séparés disposés axialement sur des côtés différents de la deuxième masse pendulaire (135).

7. Pendule inertiel (100) selon l'une des revendications précédentes, présentant trois ou plusieurs masses pendulaires (125, 135, 165) présentant différentes fréquences d'amortissement.

8. Pendule inertiel (100) selon l'une des revendications précédentes, dans lequel les troisièmes masses pendulaires (165) sont disposées axialement à l'extérieur des brides (105, 110).
